# EUROPEAN PATENT SPECIFICATION

(11) **EP 2 533 880 B1**
(45) Date of publication and mention of the grant of the patent: **04.08.2021**
(21) Application number: 11709214.8
(22) Date of filing: 10.02.2011
(51) Int. Cl.: B01D 53/26, B01D 53/04, G01N 5/02, H01F 27/14

(54) **PROCESS FOR CONTROLLING DRYER CAPABLE OF DEHUMIDIFYING AIR ENTERING THE OIL EXPANSION VESSELS USED IN ELECTRICAL APPLIANCES**
VERFAHREN ZUR STEUERUNG EINES TROCKNERS ZUR ENTFEUCHTUNG DER LUFT, DIE IN ÖLAUSDEHNUNGSGEFÄSSE IN ELEKTRISCHEN GERÄTEN EINTRITT
PROCÉDÉ DE COMMANDE DE SÉCHOIR APTE À DÉSHUMIDIFIER L'AIR PÉNÉTRANT DANS LES CUVES D'EXPANSION D'HUILE D'APPAREILS ÉLECTRIQUES

(30) Priority: 12.02.2010 IT VI20100031
(43) Date of publication of application: 19.12.2012
(73) Proprietor: Comem S.r.l., 36054 Montebello Vicentino (VI) (IT)
(72) Inventor: CAROLLO, Carlo, 36016 Thiene (VI) (IT); TONIN, Andrea, 36070 Brogliano (VI) (IT)
(74) Representative: Burchielli, Riccardo
(86) International application number: PCT/IT2011/000035
(87) International publication number: WO 2011/099046

(56) References cited:
- EP-A1- 1 313 112
- EP-A2- 0 379 975
- WO-A1-2009/019733
- DE-B3- 10 357 085
- GB-A- 2 232 093
- JP-A- 57 153 721
- US-A- 4 601 114
- US-A- 5 199 964
- US-A- 5 768 897
- US-A1- 2007 272 083
- None

## Description

The present invention, in general, refers to a process for controlling a dryer capable of dehumidifying air entering the oil expansion vessels used in electrical appliances, and, in particular, oil-insulated electrical appliances, such as for instance power transformers, loaded switches, etc.; the invention also concerns the dryer used in such a control process.

An electrical appliance containing insulating oil usually includes an oil expansion vessel which has the function of offsetting the inevitable volume changes of oil that create inside the appliance due to sudden changes in temperature; such an oil expansion vessel is supplied with air previously treated in a special dryer so as to eliminate or drastically reduce its humidity, in order to measure the correct values of the breakdown voltage of the insulating oil

### Relevant prior art:

JP 57 153721, discloses an air dryer (Fig. 1-2; abstr.) comprising two absorber tanks (7a, 7b) connected with ventilation means (1) and load cells (Fig. 1-2: 16a, 16b; Fig. 3) and a sump (5) for condensate. D1 further discloses (Fig. 3) load cells (16a, 16b) in order to initiate regeneration of the respective tank(s), as well as temperature sensors (14a, 14b) in the tanks and sensors (13a, 13b) at the tank inlet sides.

WO 2009/019733, discloses (Fig. 1) a flanged housing (10-15) with a sump (12) for condensate comprising a dehumidification container (2) with a plurality of micro apertures as inlets (2a) around the container which is coupled to a transducer (6, 7) to measure the container weight, to initiate regeneration if a threshold is exceeded.

Prior patent document WO 2005/055255 discloses a dryer front of known type, in which a dehumidifying tank has an inlet for the air to be dehumidified and an outlet for dehumidified air and absorption means, consisting of a plurality of granules or salts that can be thermally regenerated and suitable to dehumidify air coming from outside, are present inside the dehumidifying tank.

The dryer also includes a resistor, intended for the thermal regeneration of the absorption means, and at least one humidity sensor, suitable to detect the value of residual humidity in the dry air and cause the operation of the resistor if such a humidity value exceeds a predefined maximum value.

The aforesaid patent document WO 2005/055255 also discloses an operative method for the functioning of the dryer, whereby the resistor suitable to thermally regenerate the absorption granules or salts is operated when the predefined limit value of humidity is exceeded and further when no flow of air entering the oil expansion tank is detected; in other words, according to this method of functioning of the dryer, the resistor is operated only when no flow of air entering the tank oil expansion is detected, or when the air comes out from the aforesaid oil expansion tank.

However, according to this operative method of functioning, no. activation of the resistor occurs when the air flows inside the oil expansion tank, unless directional sensors are used, suitable to detect the air flow and/or its management, or pressure sensors, suitable to measure the pressure difference between the dehumidifying tank and oil expansion tank; however, such sensors have to allow very precise measures, since the typical values an air flow passing through an oil expansion tank are usually included between 0.5 and 2.5 l/min, and consequently they are very expensive.

Moreover, detection of humidity degree of the dry air does not always provide the complete regeneration of absorption means, because, sometimes, the incoming air into the dehumidifying tank follows preferential paths, this distorting the detection itself and having as consequence that the humidity sensor operates and deactivates with high frequency the resistor, with related inevitable reliability problems about of the aforesaid resistor caused by the continuous switching on and switching off cycles.

Purpose of the present invention is therefore to overcome the complained technical drawbacks and, in particular, to indicate a process for controlling a dryer, suitable to dehumidify air entering oil expansion vessels used in electrical appliances, which allows to avoid the use of directional sensors of the air flow and/or pressure sensors, while ensuring the proper functioning of the resistor used to regenerate the absorption means and operating such a resistor only if there is no air flow passing through the oil expansion vessel.

Another purpose of the present invention is to implement a process for controlling a dryer, suitable to dehumidify air entering oil expansion vessels used in electrical appliances, which is more reliable and efficient than equivalent process of known type.

Another purpose of the invention is to provide a process for controlling a dryer which allows to monitor the dehumidification state of the absorption means of the aforesaid dryer in a manner more effective than the known art, as well as to make available a dryer on which implementing said control process.

Further purpose of the invention is to indicate a process for controlling a dryer, suitable to dehumidify air entering oil expansion vessels used in electrical appliances, which allows a simplified and cheaper dryer construction, compared to the prior art.

These and other purposes are achieved through the implementation of a dryer, suitable to dehumidify air entering oil expansion vessels used in electrical appliances, according to the attached claim 1, and by a related control process, according to the appended claim 3.

Other technical features of detail of the control process and dryer, which are object of the present invention, are set forth in the respective dependent claims.

Advantageously, the control process according to the invention allows to perform accurate measured of the level of dehumidification of the absorption means and, indirectly, of the humidity degree of the just dehumidified air, while however keeping a high level of functional efficiency of the organs involved and, in particular, the heating means suitable to regenerate the abovementioned absorption means.

Still advantageously, the dryer on which the control process object of the invention is implemented is of simple construction and provides for low costs, compared to the prior art.

The above mentioned purposes and advantages will appear better evident from the description that follows, referring to a preferred embodiment of the invention and given by illustrative, but not limited, way of example with the help of the attached drawings, where:
- figure 1 is a schematic section view of a dryer, suitable to dehumidify air entering oil expansion vessels used in electrical appliances and operating according to the control process of the present invention;
- figure 2 shows an outline block diagram of the control process of a dryer, suitable to dehumidify air entering oil expansion vessels used in electrical appliances, according to the invention.

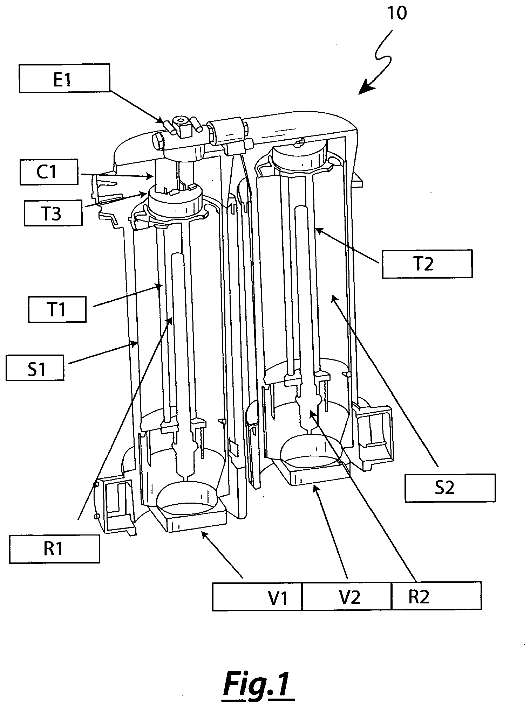

With particular reference to the mentioned figure 1, a dryer suitable to dehumidify air entering oil expansion vessels used in electrical appliances, is generically indicated with 10 and basically comprises two dehumidifying vessels or tanks S1, S2, each of which presents a series of micro-openings for entering the air to be dehumidified and an opening for outgoing the dehumidified air and contains absorption means, such as salts or salty granules, suitable to absorb humidity of air coming from the outside and which can be thermally regenerated.

Ventilation means, such as the fans V1 and V2, and heating means, such as resistors R1 and R2, are also provided, placed respectively inside the dehumidifying tanks S1 and S2 and suitable to regenerate the absorption means, as well as detection means, operatively connected with the heating means R1, R2 and suitable to determine the state of saturation of the salts contained into the tanks S1, S2.

In the invention, the detection means includes a transducer coupled with the dehumidifying tank S1 through fastening means of traditional type, which directly measures the degree of dehumidification of the absorption means contained into the tank S1.

The transducer consists of an electronic load cell C1, electrically connected with the electric energy power system, of the compression type (converting a force applied into an electrical resistance change) or traction type (converting a stretch into an electrical resistance change).

The dryer 10 also comprises an outer protective casing surrounding the dehumidifying tanks S1, S2 and provided with locking flanges, where the openings for outgoing the dehumidified air are made, and one or more sumps for collecting, conveying and discharging outside condensate which leaks, during use, from the inlet micro-openings of the tanks S1, S2.

The collection sump is also provided of an outlet suitable to discharge condensate outside and into which a filtering body is inserted, which is then crossed, in a direction, by the air to be dehumidified entering the tanks S1, S2, and, in the opposite direction, by the condensate to be discharged that is produced, during operation, in the tanks S1, S2.

Detection by the load cell C1 of a measured mass value M greater than a predefined maximum threshold value Mfs means that the absorption means contained into the tanks S1, S2 have reached a predetermined saturation level and, therefore, resistors R1, R2 are operated in order to regenerate the aforesaid absorption means (salts) to the original state.

Condensate produced at this stage leaks out from the inlet micro-openings of the side walls of the tanks S1, S2 and reaches the collection sumps, from which it is conveyed outside.

According to the invention, three resistance temperature detectors (RTD) T1, T2, T3 are also used, consisting of respective temperature sensors placed, respectively, inside the tank S1, inside the tank S2 and inside the cell room C1.

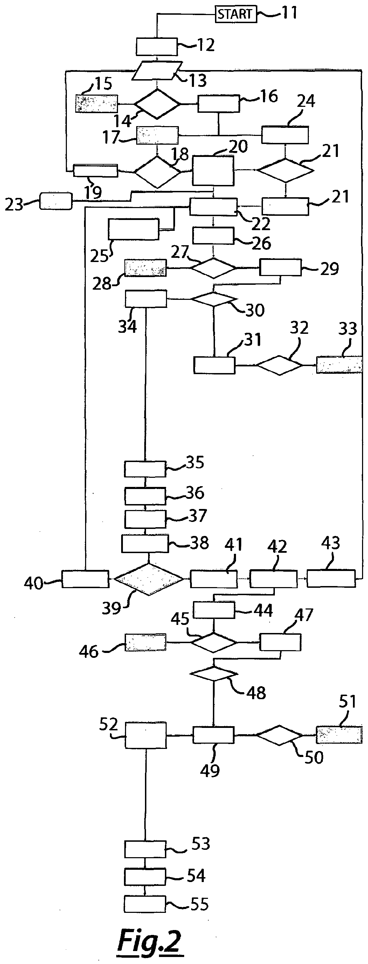

With particular reference to the attached figure 2, the control process, which is the object of the invention, as from a starting phase 11 and a setting at zero phase 12 of the data related to the load cell C1, performs a screening phase 13 of the temperature values detected by the resistance temperature detector T1 and resistance temperature detector T3 and of the mass value M detected and measured by the load cell C1 and a comparison 14 between the measured mass value M and full scale (maximum) value Mfs.

In case a condition according to which M>MFs is detected, a first alarm condition 15 occurs, while if M<Mfs (block 16) a further data processing (block 17) occurs with the calculation of the value of the parameter M (detected mass value) and comparison with the value Ms, which is a mass value prefixed by the load cell C1.

Comparing the values M and Ms (block 18), if M<Ms (block 19) the control process returns to the screening phase 13, while if M>Ms (block 20), for a predetermined time interval ts (with Ms=Ms1 and Ms1 equal to the mass value of operation of the resistor R1), the process performs a check of the cycle of the tank S2 (block 21) and switching the electric valve E1 (block 22) in such a way as to operate the tank S2, after having driven an automatic start (block 23) of the resistor R1.

The switching of the electric valve E1 and consequent activation of the tank S2 occurs even if by checking the cycle of the tank S2 (block 21) it results that the resistor R2 or fan V2 is not operating, while if these components are operating (block 24) the control process gets back to the data processing phase of the block 17.

The operation phase of the heat cycle of the tank S1 (block 25) determines the operation of the resistor R1 (block 26) and check of such a resistor R1 (block 27) and, therefore, in case of negative check, operation of an alarm (block 28) and, in case of positive check (block 29), starting of a phase of analysis (block 30) of the resistance temperature detector T1 a phase of operation (block 31) and check (block 32) of the fan V1, which, in case of negative check, causes the operation of an another alarm (block 33).

The analysis phase of the resistance temperature detector T1 (block 30) goes on by putting the temperature value which can be detected by T1 equal to an initial value T1s, when the cycle of the resistor R1 is activated, increasing such a value of a prefixed amount of °C/min (block 34), up to reach (block 35) a value T1s equal to a maximum value T1M of heat temperature of the tank S1 for a maintenance time t1m equal to a predetermined value (and equal, for example, to five hours), to a value T1s equal to 0 (block 36) and to a predetermined and settable value of temperature Y1 which can be detected by the resistance temperature detector T1, whereby the fan V1 is stopped (block 37).

In such a case, by detecting a pre-settable value Z of the difference between the temperature values which can be detected by the resistance temperature detector T1 and resistance temperature detector T3 (block 38), a phase of data processing T1, T3 and M (stage 39) is reached, whereby if M>Ms1 (block 40) the control process stars again from the switching phase of the electric valve E1 (block 22), while if M<Ms1 (block 41) a switching phase of the electric valve E1 takes place, which allows to operate the tank S1 (phase 42), and a phase of automatic setting at zero (block 43) of the load cell C1, with M=M0 and M0 equal to the mass M after setting at zero, which brings back the control process to the phase of screening of the parameters T1, T3 and M (block 13).

The phase of switching of the electric valve E1 and operation of the tank S1 (phase 42) causes the operation of the resistor R2 (phase 44) and a check phase (block 45) of the resistor R2, which, in case of negative outcome, determines the operation of an alarm (block 46), while, in case of positive outcome (block 47), determines a phase of analysis of the resistance temperature detector T2 (phase 48) and a phase of operation (phase 49) and check (phase 50) of the fan V2, which, in case of negative check, determines the activation of a related alarm (block 51).

The activation of the fan V2 (block 49) occurs for a temperature value T2s detected by T2 which can be set and increased of prefixed values of °C/min (block 52) up to a maximum value T2M of heating temperature of the tank S2 (block 53) for a pre-established maximum maintaining time interval t2m (equal, for example, to five hours), as well as up to a temperature value T2S equal to 0 (block 54) and a predetermined settable temperature value Y2 which can be detected by the three Resistance Temperature Detector (RTD) T2 for which the fan V2 is stopped (block 55).

The features of the dryer, capable of dehumidifying air entering the oil expansion vessels used in electrical appliances, and related control process, as well as the advantages, are clear from the description made.

It is, finally, clear that several other variations may be made to the dryer and control process in question, without departing from the principle of novelty intrinsic in the inventive idea expressed here, as it is clear that, in the practical implementation of the invention, materials, shapes and sizes of the illustrated details can be changed, as needed, and replaced with others technically equivalent.

## Claims

1. Process for controlling a dryer (10) suitable for dehumidifying air entering oil expansion vessels used in power electrical appliances, wherein said dryer (10) comprises at least one outer protective casing, provided with locking flanges, where openings for outgoing dehumidified air are provided, and at least one sump for collecting, conveying and discharging outside condensate, wherein said protective casing surrounds two dehumidifying tanks or vessels (S1, S2), each of which has a plurality of micro-openings for entering the air to be dehumidified and one or more openings for outgoing the dehumidified air, each of said two dehumidifying tanks (S1, S2) also containing absorption means suitable to absorb the humidity of air coming from outside and said absorption means being thermally regenerated by means of resistors (R1, R2), each of which placed inside a dehumidifying tank (S1, S2) and connected with a ventilation means (V1, V2) of said tank (S1, S2), wherein at least one load cell (C1) is fixed to a first dehumidifying tank (S1) and is configured to determine the saturation state of said absorption means contained into said first dehumidifying tank (S1) through the conversion of an applied force into an electrical resistance variation, so that a detection by said load cell (C1) of a measured mass value (M) of said absorption means greater than a predefined threshold value (Mfs, MS1) operates said resistors (R1, R2) in order to regenerate said absorption means to the original state, **characterized in that** said process comprises at least the following steps:
- starting (11) and setting at zero (12) data relating to said load cell (C1);
- monitoring (13) temperature values detected by a first temperature sensor (T1) placed inside said first dehumidifying tank (S1), by a second temperature sensor (T2) placed inside a second dehumidifying tank (S2) and by a third temperature sensor (T3) placed inside said load cell (C1) and monitoring said mass value (M) detected by said load cell (C1);
- comparing (14) said mass value (M) measured by said load cell (C1) with said predefined threshold value (Mfs);
- sending an alarm signal (15), in case said measured mass value (M) is greater than said predefined threshold value (Mfs);
- data processing (17) for computing a first mass value (M) and for comparing said first mass value (M) with at least one prefixed second mass value (Ms), in case said measured mass value (M) is lower than said predefined threshold value (Mfs) (16);
- monitoring (13) said temperature values, in case said measured mass value (M) is lower than said prefixed second mass value (Ms) (18);
- performing the following steps in case said measured mass value (M) is greater than said prefixed second mass value (Ms) for a prefixed time limit (ts) (20) and said measured mass value (M) is greater than a third mass value (Ms1) which is equal to a mass value able to operate a first resistor (R1) placed inside said first dehumidifying tank (S1):
∘ checking (21) if a second resistor (R2) and/or a ventilation means (V2) placed inside said second dehumidifying tank (S2) is/are operating
∘ and switching on an electric valve (E1) for operating (22, 23) said second dehumidifying tank (S2) and said first resistor (R1) coupled with said first dehumidifying tank (S1).

2. Process as claimed in claim 1, **characterized in that** said electric valve (E1) is switched on (22, 23) when said second resistor (R2) and/or said second ventilation means (V2), which are coupled with said second dehumidifying tank (S2), are off.

3. Process as claimed in at least one of the previous claims, **characterized in that** said data processing (17) step is performed in case said second resistor (R2) and/or said second ventilating means (V2), which are coupled with said second dehumidifying tank (S2), are on (24).

4. Process as claimed in at least one of the previous claims, **characterized in that** an alarm is activated (28) in case said first resistor (R1), which is coupled with said first dehumidifying tank (S1), is not operating.

5. Process as claimed in claim 2, **characterized in that** the following steps are performed:
- switching on (31) and testing (32) said first ventilating means (V1) coupled with said first dehumidifying tank (S1), in case said first resistor (R1) is operating;
- allocating an initial value (T1s), a maximum value (T1M) and a predetermined and settable temperature value (Y1) of a heating temperature of said first dehumidifying tank (S1), said heating temperature being detected by said first temperature sensor (T1), said initial value (T1s) being equal to 0 and corresponding to when said first resistors (R1) is activated and said predetermined and settable temperature value (Y1) corresponding to when said first ventilating means (V1) stops (37);
- setting a prefixed time interval (t1 m);
- increasing (35) said initial value (T1s) of a prefixed amount of temperature per minute up to (35) a value equal to said maximum value (T1M), for a time interval (T1m) equal to said prefixed time interval which has been set;
- varying the temperature value to said initial value (T1s);
- varying the temperature value to said predetermined and settable temperature value (Y1),
- stopping (37) said first ventilating means (V1).

6. Process as claimed in claim 5, **characterized in that** it includes the further following steps:
- detecting (38) a value (Z) equal to the difference between the temperature values detected by said first temperature sensor (T1) placed inside said first dehumidifying tank (S1) and said third temperature sensor (T3) coupled with said load cell (C1);
- processing (39) data coming from said first temperature sensor (T1) and from said third temperature sensor (T3), according to which, if said measured mass value (M) is greater than said third mass value (Ms1), said process restarts from said switching on (22) of said second dehumidifying tank (S2), while, if said measured mass value (M) is lower than said third mass value (Ms1), said process provides for a switching phase, which allows to switch on (42) said electric valve (E1) and to provide an automatic zero setting (43) of said load cell (C1), with said measured mass value (M) equal to a fourth mass value (M0), which is equal to the mass value detected by the load cell (C1) after said zero setting, so as to bring said process back to said monitoring step (13) of said temperature values and said measured mass value (M).

7. Process as claimed in claim 6, **characterized in that** said switching on (42) of said electric valve (E1) causes a further switching on (44) and testing (45) phase of said second resistor (R2) coupled with said second dehumidifying tank (S2) in order to check if it is operating or not and an alarm is activated (46) in case during said testing phase (45) of said second resistor (R2), said second resistor (R2) is not operating.

8. Process as claimed in claim 7, **characterized in that**, if said testing phase (45) of said second resistor (R2) reveals that said second resistor (R2) is operating, said process provides for:
- switching on (49) and testing (50) said second ventilating means (V2) coupled with said second dehumidifying tank (S2) and
- allocating a prefixed heating temperature value (T2s), a maximum heating temperature value (T2M), a predetermined third heating temperature value (T2S) and a settable heating temperature value (Y2) by means of said temperature sensor (T2) of said second dehumidifying tank (S2), the third heating temperature value (T2S) being equal to 0 and corresponding to when said first resistor (R1) is activated and said settable heating temperature value (Y2) corresponding to when second ventilating means (V2) stops (55),
- setting a pre-established maximum interval of time (t2m);
- incrementing (52) said prefixed heating temperature value (T2s) with predetermined ranges of value of temperature per minute up (53) to said maximum heating temperature value (T2M), for a time interval equal to said pre-established maximum interval of time (t2m),
- varying the temperature value (54) up to said third heating temperature value (T2S) and/or equal to said settable heating temperature value (Y2).

## Patentansprüche

1. Verfahren zum Steuern eines Trockners (10), der zum Entfeuchten von Luft, die in bei Elektrogeräten verwendete Ölausdehnungsbehälter eindringt, geeignet ist, wobei der Trockner (10) mindestens ein mit Sperrflanschen versehenes äußeres Schutzgehäuse, in dem Öffnungen für austretende entfeuchtete Luft bereitgestellt sind, und mindestens einen Sumpf zum Sammeln, Transportieren und Ableiten nach außen von Kondensat umfasst, wobei das Schutzgehäuse zwei Entfeuchtungstanks oderbehälter (S1, S2) umschließt, die jeweils eine Vielzahl von Mikroöffnungen zum Einlassen der zu entfeuchtenden Luft und eine oder mehrere Öffnungen zum Auslassen der entfeuchteten Luft aufweisen, wobei jeder der zwei Entfeuchtungstanks (S1, S2) zudem ein Absorptionsmittel enthält, das geeignet ist, die Feuchtigkeit der von außen kommenden Luft zu absorbieren, und das Absorptionsmittel anhand von Widerständen (R1, R2), die jeweils im Inneren eines Entfeuchtungstanks (S1, S2) platziert sind und mit einem Belüftungsmittel (V1, V2) des Tanks (S1, S2) verbunden sind, thermisch regeneriert wird, wobei mindestens eine Kraftmessdose (C1) an einem ersten Entfeuchtungstank (S1) angebracht ist und konfiguriert ist, um den Sättigungszustand des in dem ersten Entfeuchtungstank (S1) enthaltenen Absorptionsmittels durch die Umwandlung einer angelegten Kraft in eine Änderung des elektrischen Widerstands zu bestimmen, sodass eine Detektion eines gemessenen Massenwerts (M) des Absorptionsmittels, der größer ist als ein vorab definierter Schwellenwert (Mfs, MS1), durch die Kraftmessdose (C1) die Widerstände (R1, R2) betreibt, um das Absorptionsmittel in den Originalzustand zu regenerieren,
**dadurch gekennzeichnet, dass** das Verfahren mindestens die folgenden Schritte umfasst:
- Starten (11) und Einstellen auf null (12) von Daten, die sich auf die Kraftmessdose (C1) beziehen;
- Überwachen (13) von Temperaturwerten, die von einem im Inneren des ersten Entfeuchtungstanks (S1) platzierten ersten Temperatursensors (T1) detektiert werden, durch einen im Inneren eines zweiten Entfeuchtungstanks (S2) platzierten zweiten Temperatursensor (T2) und einen im Inneren der Kraftmessdose (C1) platzierten dritten Temperatursensor (T3) und Überwachen des von der Kraftmessdose (C1) detektierten Massenwerts (M);
- Vergleichen (14) des von der Kraftmessdose (C1) detektierten Massenwerts (M) mit dem vorab definierten Schwellenwert (Mfs);
- Senden eines Alarmsignals (15), falls der gemessene Massenwert (M) größer ist als der vorab definierte Schwellenwert (Mfs);
- Verarbeiten von Daten (17) zum Berechnen eines ersten Massenwerts (M) und zum Vergleichen des erstens Massenwerts (M) mit mindestens einem vorgegebenen zweiten Massenwert (Ms), falls der gemessene Massenwert (M) geringer ist als der vorab definierte Schwellenwert (Mfs) (16);
- Überwachen (13) der Temperaturwerte, falls der gemessene Massenwert (M) geringer ist als der vorgegebene zweite Massenwert (Ms) (18);
- Durchführen der folgenden Schritte, falls der gemessene Massenwert (M) für ein vorgegebenes Zeitlimit (ts) größer ist als der vorgegebene zweite Massenwert (Ms) (20) und der gemessene Massenwert (M) größer ist als ein dritter Massenwert (Ms1), der gleich einem Massenwert ist, der einen im Inneren des ersten Entfeuchtungstanks (S1) platzierten ersten Widerstand (R1) betreiben kann:
∘ Überprüfen (21), ob ein zweiter Widerstand (R2) und/oder ein im Inneren des zweiten Entfeuchtungstanks (S2) platziertes Belüftungsmittel (V2) arbeitet/arbeiten,
∘ und Anschalten eines elektrischen Ventils (E1) zum Betreiben (22, 23) des zweiten Entfeuchtungstanks (S2) und des an den ersten Entfeuchtungstank (S1) gekoppelten ersten Widerstands (R1).

2. Verfahren nach Anspruch 1, **dadurch gekennzeichnet, dass** das elektrische Ventil (E1) angeschaltet wird (22, 23), wenn der zweite Widerstand (R2) und/oder das zweite Belüftungsmittel (V2), die an den zweiten Entfeuchtungstank (S2) gekoppelt sind, aus ist/sind.

3. Verfahren nach mindestens einem der vorstehenden Ansprüche, **dadurch gekennzeichnet, dass** der Schritt der Datenverarbeitung (17) durchgeführt wird, wenn der zweite Widerstand (R2) und/oder das zweite Belüftungsmittel (V2), die an den zweiten Entfeuchtungstank (S2) gekoppelt sind, an ist/sind (24).

4. Verfahren nach mindestens einem der vorstehenden Ansprüche, **dadurch gekennzeichnet, dass** ein Alarm aktiviert wird (28), wenn der erste Widerstand (R1), der an den ersten Entfeuchtungstank (S1) gekoppelt ist, nicht arbeitet.

5. Verfahren nach Anspruch 2, **dadurch gekennzeichnet, dass** die folgenden Schritte durchgeführt werden:
- Anschalten (31) und Testen (32) des an den ersten Entfeuchtungstank (S1) gekoppelten ersten Belüftungsmittels (V1), wenn der erste Widerstand (R1) arbeitet;
- Zuordnen eines Anfangswerts (T1s), eines Höchstwerts (T1M) und eines vorher festgelegten und einstellbaren Temperaturwerts (Y1) einer Erwärmungstemperatur des ersten Entfeuchtungstanks (S1), wobei die Erwärmungstemperatur von dem ersten Temperatursensor detektiert wird, wobei der Anfangswert (T1s) gleich 0 ist und dem Zeitpunkt der Aktivierung des ersten Widerstands (R1) entspricht und der vorher festgelegte und einstellbare Temperaturwert (Y1) dem Zeitpunkt des Stoppens (37) des ersten Belüftungsmittels (V1) entspricht;
- Einstellen eines vorgegebenen Zeitintervalls (t1m);
- Erhöhen (35) des Anfangswerts (T1s) einer vorgegebenen Temperaturmenge pro Minute bis auf (35) einen Wert, der gleich dem Höchstwert (T1M) ist, für ein Zeitintervall (T1m), das gleich dem vorgegebenen Zeitintervall ist, das eingestellt wurde;
- Verändern des Temperaturwerts auf den Anfangswert (T1s);
- Verändern des Temperaturwerts auf den vorher festgelegten und einstellbaren Temperaturwert (Y1);
- Stoppen (37) des ersten Belüftungsmittels (V1).

6. Verfahren nach Anspruch 5, **dadurch gekennzeichnet, dass** es die folgenden weiteren Schritte einschließt:
- Detektieren (38) eines Werts (Z), der gleich dem Unterschied zwischen den Temperaturwerten, die von dem im Inneren des ersten Entfeuchtungstanks (S1) platzierten ersten Temperatursensor (T1) und von dem an die Kraftmessdose (C1) gekoppelten dritten Temperatursensor (T3) detektiert werden, ist;
- Verarbeiten (39) von Daten, die von dem ersten Temperatursensor (T1) und dem dritten Temperatursensor (T3) stammen, demzufolge das Verfahren, wenn der gemessene Massenwert (M) größer ist als der dritte Massenwert (Ms1), ab dem Anschalten (22) des zweiten Entfeuchtungstanks (S2) erneut startet, während das Verfahren, wenn der gemessene Massenwert (M) geringer ist als der dritte Massenwert (Ms1), eine Schaltphase vorsieht, die es ermöglicht, das elektrische Ventil (E1) anzuschalten (42) und eine automatische Nulleinstellung der Kraftmessdose (C1) bereitzustellen (43), wobei der gemessene Massenwert (M) gleich einem vierten Massenwert (M0) ist, der gleich dem von der Kraftmessdose (C1) nach der Nulleinstellung detektierten Massenwert ist, um das Verfahren zurück zum Überwachungsschritt (13) der Temperaturwerte und des gemessenen Massenwerts (M) zu bringen.

7. Verfahren nach Anspruch 6, **dadurch gekennzeichnet, dass** das Anschalten (42) des elektrischen Ventils (E1) eine weitere Anschalt- (44) und Testphase (45) des an den zweiten Entfeuchtungstank (S2) gekoppelten zweiten Widerstands (R2) bewirkt, um zu überprüfen, ob er arbeitet oder nicht, und ein Alarm aktiviert wird (46), wenn während der Testphase (45) des zweiten Widerstands (R2) der zweite Widerstand (R2) nicht arbeitet.

8. Verfahren nach Anspruch 7, **dadurch gekennzeichnet, dass**, wenn die Testphase (45) des zweiten Widerstands (R2) zeigt, dass der zweite Widerstand (R2) arbeitet, das Verfahren Folgendes vorsieht:
- Anschalten (49) und Testen (50) des an den zweiten Entfeuchtungstank (S2) gekoppelten zweiten Belüftungsmittels (V2) und
- Zuordnen eines vorgegebenen Erwärmungstemperaturwerts (T2s), eines Erwärmungstemperaturhöchstwerts (T2M), eines vorher festgelegten dritten Erwärmungstemperaturwerts (T2S) und eines einstellbaren Erwärmungstemperaturwerts (Y2) mittels des Temperatursensors (T2) des zweiten Entfeuchtungstanks (S2), wobei der dritte Erwärmungstemperaturwert (T2S) gleich 0 ist und dem Zeitpunkt der Aktivierung des ersten Widerstands (R1) entspricht und der einstellbare Erwärmungstemperaturwert (Y2) dem Zeitpunkt des Stoppens (55) des zweiten Belüftungsmittels (V2) entspricht,
- Einstellen eines vorab bestimmten maximalen Zeitintervalls (t2m);
- schrittweises Erhöhen (52) des vorgegebenen Erwärmungstemperaturwerts (T2s) mit vorab festgelegten Temperaturwertbereichen pro Minute (53) bis zum Erwärmungstemperaturhöchstwert (T2M) für ein Zeitintervall, das gleich dem vorab bestimmten maximalen Zeitintervall (t2m) ist,
- Verändern des Temperaturwerts (54) auf den dritten Erwärmungstemperaturwert (T2S) und/oder gleich den einstellbaren Erwärmungstemperaturwert (Y2).

## Revendications

1. Procédé de commande d'un séchoir (10) capable de déshumidifier de l'air pénétrant dans des cuves d'expansion d'huile utilisées dans des appareils électriques, dans lequel ledit séchoir (10) comprend au moins un carter de protection externe, pourvu de rebords de verrouillage, où des ouvertures pour la sortie d'air déshumidifié sont prévues, et au moins un puisard pour collecter, acheminer et décharger vers l'extérieur un condensat, dans lequel ledit carter de protection entoure deux réservoirs ou cuves de déshumidification (S1, S2), chacun(e) ayant une pluralité de micro-ouvertures pour l'entrée de l'air devant être déshumidifié et une ou plusieurs ouvertures pour la sortie de l'air déshumidifié, chacune desdits deux réservoirs de déshumidification (S1, S2) contenant également un moyen d'absorption capable d'absorber l'humidité de l'air provenant de l'extérieur et ledit moyen d'absorption étant régénéré thermiquement au moyen de résistances (R1, R2), chacune d'elles étant placée à l'intérieur d'un réservoir de déshumidification (S1, S2) et reliée avec un moyen de ventilation (V1, V2) dudit réservoir (S1, S2), dans lequel au moins une cellule dynamométrique (C1) est fixée à un premier réservoir de déshumidification (S1) et est conçue pour déterminer l'état de saturation dudit moyen d'absorption contenu dans ledit premier réservoir de déshumidification (S1) par le biais de la conversion d'une force appliquée en une variation de résistance électrique, de sorte qu'une détection par ladite cellule dynamométrique (C1) d'une valeur de masse mesurée (M) dudit moyen d'absorption supérieure à une valeur seuil prédéfinie (Mfs, MS1) fait fonctionner lesdites résistances (R1, R2) afin de régénérer ledit moyen d'absorption jusqu'à l'état d'origine, **caractérisé en ce que** ledit procédé comprend au moins les étapes suivantes :
- démarrage (11) et mise à zéro (12) de données relatives à ladite cellule dynamométrique (C1) ;
- surveillance (13) de valeurs de température détectées par un premier capteur de température (T1) placé à l'intérieur dudit premier réservoir de déshumidification (S1), par un deuxième capteur de température (T2) placé à l'intérieur d'un second réservoir de déshumidification (S2) et par un troisième capteur de température (T3) placé à l'intérieur de ladite cellule dynamométrique (C1) et surveillance de ladite valeur de masse (M) détectée par ladite cellule dynamométrique (C1) ;
- comparaison (14) de ladite valeur de masse (M) mesurée par ladite cellule dynamométrique (C1) avec ladite valeur seuil prédéfinie (Mfs) ;
- envoi d'un signal d'alarme (15), dans le cas où ladite valeur de masse mesurée (M) est supérieure à ladite valeur seuil prédéfinie (Mfs) ;
- traitement de données (17) pour calculer une première valeur de masse (M) et pour comparer ladite première valeur de masse (M) avec au moins une deuxième valeur de masse préfixée (Ms), dans le cas où ladite valeur de masse mesurée (M) est inférieure à ladite valeur seuil prédéfinie (Mfs) (16) ;
- surveillance (13) desdites valeurs de température, dans le cas où ladite valeur de masse mesurée (M) est inférieure à ladite deuxième valeur de masse préfixée (Ms) (18) ;
- réalisation des étapes suivantes dans le cas où ladite valeur de masse mesurée (M) est supérieure à ladite deuxième valeur de masse préfixée (Ms) pendant un délai préfixé (ts) (20) et ladite valeur de masse mesurée (M) est supérieure à une troisième valeur de masse (Ms1) qui est égale à une valeur de masse apte à faire fonctionner une première résistance (R1) placée à l'intérieur dudit premier réservoir de déshumidification (S1) :
• vérification (21) si une seconde résistance (R2) et/ou un moyen de ventilation (V2) placé à l'intérieur dudit second réservoir de déshumidification (S2) fonctionne(nt) ;
• et mise en marche d'une électrovanne (E1) pour faire fonctionner (22, 23) ledit second réservoir de déshumidification (S2) et ladite première résistance (R1) couplée audit premier réservoir de déshumidification (S1).

2. Procédé selon la revendication 1, **caractérisé en ce que** ladite électrovanne (E1) est mise en marche (22, 23) lorsque ladite seconde résistance (R2) et/ou ledit second moyen de ventilation (V2), qui sont couplés audit second réservoir de déshumidification (S2) sont éteints.

3. Procédé selon au moins une des revendications précédentes, **caractérisé en ce que** ladite étape de traitement de données (17) est réalisée dans le cas où ladite seconde résistance (R2) et/ou ledit second moyen de ventilation (V2), qui sont couplés audit second réservoir de déshumidification (S2), sont allumés (24).

4. Procédé selon au moins une des revendications précédentes, **caractérisé en ce qu'**une alarme est activée (28) dans le cas où ladite première résistance (R1), qui est couplée audit premier réservoir de déshumidification (S1), ne fonctionne pas.

5. Procédé selon la revendication 2, **caractérisé en ce que** les étapes suivantes sont réalisées :
- mise en marche (31) et essai (32) dudit premier moyen de ventilation (V1) couplé audit premier réservoir de déshumidification (S1), dans le cas où ladite première résistance (R1) fonctionne ;
- affectation d'une valeur initiale (T1s), d'une valeur maximale (T1M) et d'une valeur de température prédéterminée et réglable (Y1) d'une température de chauffage dudit premier réservoir de déshumidification (S1), ladite température de chauffage étant détectée par ledit premier capteur de température (T1), ladite valeur initiale (T1s) étant égale à 0 et correspondant au moment où ladite première résistance (R1) est activée et ladite valeur de température prédéterminée et réglable (Y1) correspondant au moment où ledit premier moyen de ventilation (V1) s'arrête (37) ;
- réglage d'un intervalle de temps préfixé (t1m) ;
- augmentation (35) de ladite valeur initiale (T1s) d'une quantité de température préfixée par minute jusqu'à (35) une valeur égale à ladite valeur maximale (T1M), pendant un intervalle de temps (T1m) égal audit intervalle de temps préfixé qui a été réglé ;
- variation de la valeur de température vers ladite valeur initiale (T1s) ;
- variation de la valeur de température vers ladite valeur de température prédéterminée et réglable (Y1),
- arrêt (37) dudit premier moyen de ventilation (V1).

6. Procédé selon la revendication 5, **caractérisé en ce qu'**il inclut les autres étapes suivantes :
- détection (38) d'une valeur (Z) égale à la différence entre les valeurs de température détectées par ledit premier capteur de température (T1) placé à l'intérieur dudit premier réservoir de déshumidification (S1) et ledit troisième capteur de température (T3) couplé à ladite cellule dynamométrique (C1) ;
- traitement (39) de données provenant dudit premier capteur de température (T1) et dudit troisième capteur de température (T3), selon lequel, si ladite valeur de masse mesurée (M) est supérieure à ladite troisième valeur de masse (Ms1), ledit procédé redémarre à partir de ladite mise en marche (22) dudit second réservoir de déshumidification (S2), alors que, si ladite valeur de masse mesurée (M) est inférieure à ladite troisième valeur de masse (Ms1), ledit procédé assure une phase de commutation, qui permet de mettre en marche (42) ladite électrovanne (E1) et d'assurer une mise à zéro automatique (43) de ladite cellule dynamométrique (C1), ladite valeur de masse mesurée (M) étant égale à une quatrième valeur de masse (M0), qui est égale à la valeur de masse détectée par la cellule dynamométrique (C1) après ladite mise à zéro, de sorte à ramener ledit procédé à ladite étape de surveillance (13) desdites valeurs de température et de ladite valeur de masse mesurée (M).

7. Procédé selon la revendication 6, **caractérisé en ce que** ladite mise en marche (42) de ladite soupape électrique (E1) amène une autre phase de mise en marche (44) et d'essai (45) de ladite seconde résistance (R2) couplée audit second réservoir de déshumidification (S2) afin de vérifier si elle fonctionne ou pas et une alarme est activée (46) dans le cas où pendant ladite phase d'essai (45) de ladite seconde résistance (2), ladite seconde résistance (R2) ne fonctionne pas.

8. Procédé selon la revendication 7, **caractérisé en ce que**, si ladite phase d'essai (45) de ladite seconde résistance (R2) révèle que ladite seconde résistance (R2) fonctionne, ledit procédé assure :
- la commutation (49) et l'essai (50) dudit second moyen de ventilation (V2) couplé audit second réservoir de déshumidification (S2) et
- l'affectation d'une valeur de température de chauffage préfixée (T2s), d'une valeur de température de chauffage maximale (T2M), d'une troisième valeur de température de chauffage prédéterminée (T2S) et d'une valeur de température de chauffage réglable (Y2) au moyen dudit capteur de température (T2) dudit second réservoir de déshumidification (S2), la troisième valeur de température de chauffage (T2S) étant égale à 0 et correspondant au moment où ladite première résistance (R1) est activée et ladite valeur de température de chauffage réglable (Y2) correspondant au moment où le second moyen de ventilation (V2) s'arrête (55),
- le réglage d'un intervalle de temps maximum préétabli (t2m) ;
- l'incrémentation (52) de ladite valeur de température de chauffage préfixée (T2s) avec des plages de valeur de température prédéterminées par minute jusqu'à (53) ladite valeur de température de chauffage maximale (T2M), pendant un intervalle de temps égal audit intervalle de temps maximum préétabli (t2m),
- la variation de la valeur de température (54) jusqu'à ladite troisième valeur de température de chauffage (T2S) et/ou à une valeur égale à ladite valeur de température de chauffage réglable (Y2).
